# EUROPEAN PATENT APPLICATION

(11) **EP 4 793 502 A1**
(43) Date of publication of application: **19.08.2026**
(21) Application number: 24897544.3
(22) Date of filing: 26.11.2024
(51) Int. Cl.: F04B 53/10, F04B 15/08

(54) **RECIPROCATING PUMP**

(30) Priority: 30.11.2023 JP 2023203026
(71) Applicant: Mitsubishi Heavy Industries, Ltd., Chiyoda-ku Tokyo 100-8332 (JP)
(72) Inventor: TSURUOKA Seiji, Tokyo 100-8332 (JP); SEKIHARA Masaru, Tokyo 100-8332 (JP); HAYASHI Noriyuki, Tokyo 100-8332 (JP); SAKURAI Tsuyoshi, Tokyo 100-8332 (JP); FUJIWARA Naoko, Tokyo 100-8332 (JP); MITSUDA Kimihiko, Tokyo 100-8332 (JP); ASAI Hideaki, Tokyo 100-8332 (JP); MATSUBAYASHI Toshiki, Tokyo 100-8332 (JP)
(74) Representative: Studio Torta S.p.A.
(86) International application number: PCT/JP2024/041838
(87) International publication number: WO 2025/115860

(57) **Abstract**

A reciprocating pump includes a suction valve that switches a flow state of liquid, in which the suction valve includes a cylindrical member that forms an internal flow passage through which the liquid flows and a valve body that is configured to move advanceably and retractably with respect to the cylindrical member in an axial direction, the valve body includes a rod portion that extends in the axial direction and a head portion that has a seat surface formed in a conical surface shape that gradually increases in diameter from a first side toward a second side in the axial direction, and the cylindrical member includes a valve seat formed in a conical surface shape that is in contact with or is separated from an outer-peripheral surface of the head portion and a pressure-receiving outer-peripheral surface that is provided in a region overlapping the valve seat in the axial direction and is fitted, via a gap communicating with a compression chamber, into an inner-peripheral surface of a cylinder on a radially outer side of the valve seat.

## Description

### TECHNICAL FIELD

The present disclosure relates to a reciprocating pump.

Priority is claimed on Japanese Patent Application No. 2023-203026, filed November 30, 2023, the content of which is incorporated herein by reference.

### BACKGROUND ART

A reciprocating pump has been used as a device for compressing liquid hydrogen. This type of pump can raise a pressure of the liquid hydrogen to about 90 MPa, for example. Specifically, the reciprocating pump mainly includes a piston that reciprocates in an axial direction and a cylinder that covers the piston from an outer side. The piston reciprocates in the cylinder to sequentially compress the liquid hydrogen, and the liquid hydrogen is taken out to the outside. A drive unit drives the piston.

A suction valve and a delivery valve for supplying and discharging liquid are provided in parallel in the piston. An example of this type of valve includes a valve described in Patent Document 1. In a valve device related to a fuel supply device described in Patent Document 1, an annular space communicating with a fuel passage, which configures a fuel suction path or a fuel delivery path, is formed near the periphery of a seat surface of a valve seat, and pressure is introduced into the annular space during valve closing. Accordingly, deformation that causes an inner diameter of the seat surface to return in a radial direction occurs with respect to deformation that causes the inner diameter of the seat surface to bulge toward an outer diameter side in the radial direction, and thus the seat portion deformation can be offset.

### Citation List

### Patent Document

Patent Document 1: Japanese Patent No. 4241611

### SUMMARY OF INVENTION

### Technical Problem

However, in the reciprocating pump for compressing the liquid hydrogen as described above, a pressure of up to about 90 MPa is applied to the valve device. For this reason, there is a problem in that the closure of the seat surface is not sufficiently ensured only by the formation of the annular space as described above, and as a result, sealing performance of the valve device is insufficient.

The present disclosure provides a reciprocating pump having a suction valve or a delivery valve that exhibits higher sealing performance.

### Solution to Problem

A reciprocating pump according to the present disclosure includes a pump body including a piston that compresses liquid and a cylinder that has a cylindrical shape centered on an axis and covers the piston from an outer side, a drive unit that causes the piston to reciprocate in an axial direction with respect to the cylinder, and a suction valve and a delivery valve that are provided in the cylinder and switch a flow state of the liquid, in which the suction valve includes a cylindrical member that is inserted into an accommodation hole formed in an end portion of the cylinder on a first side in the axial direction, and a valve body that is configured to move advanceably and retractably in the axial direction with respect to the cylindrical member, the valve body includes a rod portion that extends in the axial direction, and a head portion that is provided at an end portion of the rod portion on a second side in the axial direction and has a seat surface formed in a conical surface shape that gradually increases in diameter from the first side toward the second side in the axial direction, and the cylindrical member includes a valve seat formed in a conical surface shape that is in contact with or is separated from an outer-peripheral surface of the head portion, and a pressure-receiving outer-peripheral surface that is fitted, via a gap communicating with a compression chamber, into an inner-peripheral surface of the cylinder on a radially outer side of the valve seat.

A reciprocating pump according to the present disclosure includes a pump body including a piston that compresses liquid and a cylinder that has a cylindrical shape centered on an axis and covers the piston from an outer side, a drive unit that causes the piston to reciprocate in an axial direction with respect to the cylinder, and a delivery valve that is provided in the cylinder and switches a flow state of the liquid, in which the delivery valve includes a second cylindrical member that is provided in parallel in an outer-peripheral surface of the cylinder and has a second valve seat formed in a conical surface shape that has a cylindrical shape centered on a second axis extending in a direction intersecting the axis and is centered on the second axis, a second valve body that is configured to move advanceably and retractably in the second axial direction with respect to the second cylindrical member, and a casing that covers the second cylindrical member from the outer side, the second valve body includes a second rod portion that extends in the second axial direction and a second head portion that is provided at an end portion of the second rod portion on a second side in the second axial direction and has a second seat surface formed in a conical surface shape that gradually increases in diameter from a first side toward the second side in the second axial direction, a second seal groove that has an annular shape centered on the second axis and is recessed toward the first side in the second axial direction to accommodate a seal ring is formed in an end surface of the second cylindrical member facing the second side in the second axial direction, and in a cross-sectional view including the second axis, an apex angle, which is an angle formed by the second seat surface of the second valve body with respect to the second axis, is 130° or more and 150° or less. Advantageous Effects of Invention

According to the present disclosure, it is possible to provide the reciprocating pump having the suction valve or the delivery valve that exhibits the higher sealing performance.

### BRIEF DESCRIPTION OF DRAWINGS

[FIG. 1] A longitudinal sectional view of the configuration of a reciprocating pump according to an embodiment of the present disclosure.
[FIG. 2] An enlarged cross-sectional view of a suction valve according to the embodiment of the present disclosure, and is a view showing a state in which the valve is closed.
[FIG. 3] An enlarged cross-sectional view of the suction valve according to the embodiment of the present disclosure, and is a view showing a state in which the valve is open.
[FIG. 4] An enlarged cross-sectional view of a delivery valve according to the embodiment of the present disclosure, and is a view showing a state in which the valve is closed.
[FIG. 5] An enlarged cross-sectional view of the delivery valve according to the embodiment of the present disclosure, and is a view showing a state in which the valve is open.

### DESCRIPTION OF EMBODIMENTS

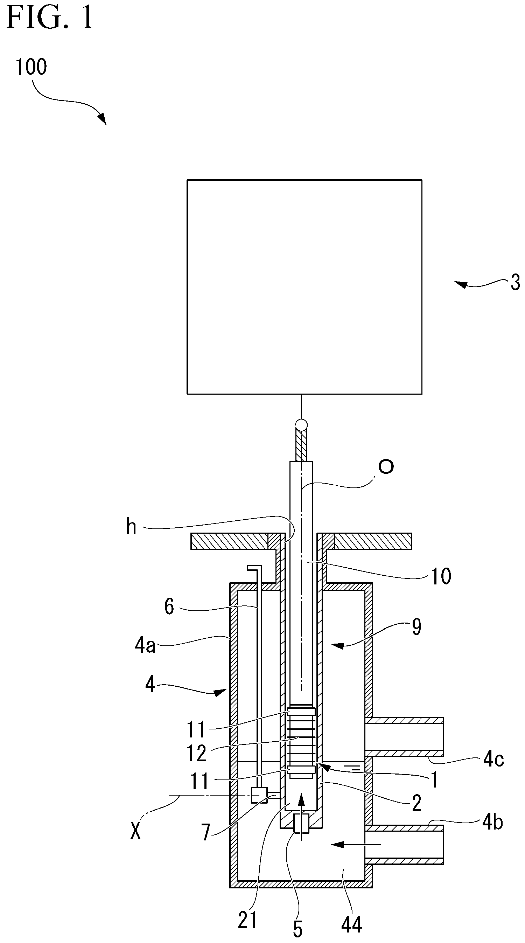

Hereinafter, a reciprocating pump 100 according to an embodiment of the present disclosure will be described with reference to FIGS. 1 to 5.

### (Configuration of Reciprocating Pump 100)

The reciprocating pump 100 is a device for raising a pressure of liquid at an extremely low temperature, such as liquid hydrogen, to a high pressure (about 90 MPa). As shown in FIG. 1, the reciprocating pump 100 includes a piston 1, a cylinder 2, a drive unit 3, a casing 4, a suction valve 5, a discharge pipe 6, and a delivery valve 7. The piston 1 and the cylinder 2 configure a pump body 9.

### (Configuration of Piston 1)

The piston 1 has a piston body 10 formed in a columnar shape that extends in an up-down direction and is centered on an axis O, a wear ring 11 that is attached to the piston body 10, and a piston ring 12. A dimension of the piston body 10 in a radial direction is constant over the entire region in an axis O direction. The wear ring 11 is provided at a tip portion of the piston body 10. The wear ring 11 has an annular shape centered on the axis O and is made of a resin material.

One wear ring 11 is provided at an end portion below the piston body 10, and one more wear ring 11 is provided at a spacing from the wear ring 11 in the axis O direction. A plurality of (six as an example) piston rings 12 arranged at spacings in the axis O direction are provided between the pair of wear rings 11. The wear ring 11 is provided to guide the piston body 10 along an inner-peripheral surface of the cylinder 2, which will be described below. On the other hand, the piston ring 12 is provided to maintain liquid-tightness and airtightness between the piston ring 12 and the inner-peripheral surface of the cylinder 2. A configuration of the piston ring 12 will be described below.

### (Configuration of Cylinder 2)

The cylinder 2 has a bottomed cylindrical shape that covers the piston 1 from an outer-peripheral side thereof. The piston 1 is inserted into the cylinder 2 from an opening portion h above the cylinder 2. A space below a tip portion of the piston 1 inside the cylinder 2 is a compression chamber 21. A delivery hole 2c that communicates the compression chamber 21 with the outside (delivery valve 7 described below) is formed in the inner-peripheral surface of the cylinder 2. The suction valve 5 for guiding the liquid hydrogen to the compression chamber 21 is provided at a bottom portion of the cylinder 2. The suction valve 5 can allow the liquid hydrogen to flow only in a direction from the outside of the cylinder 2 toward the inside of the compression chamber 21. In other words, even in a case where the pressure of the compression chamber 21 increases, the liquid hydrogen does not flow out of the cylinder 2 through the suction valve 5.

The discharge pipe 6 is connected to a portion that is a side surface of the cylinder 2 and faces the compression chamber 21. The discharge pipe 6 is provided to take out the liquid hydrogen compressed in the compression chamber 21 to the outside of the cylinder 2. The delivery valve 7 is provided on the discharge pipe 6. The delivery valve 7 can allow the liquid hydrogen to flow only in a direction from the compression chamber 21 toward the outside in a case where the pressure in the compression chamber 21 is equal to or larger than a predetermined value.

### (Configuration of Drive Unit 3)

The drive unit 3 applies a driving force to the piston 1 described above in the cylinder 2, which reciprocates the piston 1 in the axis O direction. The drive unit 3 causes the piston 1 to reciprocate in the cylinder 2 by an electric motor and a link mechanism (not shown).

### (Configuration of Casing 4)

The casing 4 is a container that covers the cylinder 2 described above from the outside. The casing 4 has a casing body 4a formed in a bottomed tubular shape, a supply pipe 4b, and a gas discharge pipe 4c. The supply pipe 4b is for guiding the liquid hydrogen from an external supply source into the casing body 4a (liquid storage chamber 44). The supply pipe 4b is provided in the vicinity of a bottom surface of the casing body 4a. The gas discharge pipe 4c is provided to discharge a component vaporized in the liquid storage chamber 44 (gas component) to the outside. The gas discharge pipe 4c is provided at a position separated upward from the supply pipe 4b. Further, a liquid surface of the liquid hydrogen in the liquid storage chamber 44 is adjusted to be positioned below the gas discharge pipe 4c. The discharge pipe 6 described above extends to the outside of the casing 4.

### (Configuration of Suction Valve 5)

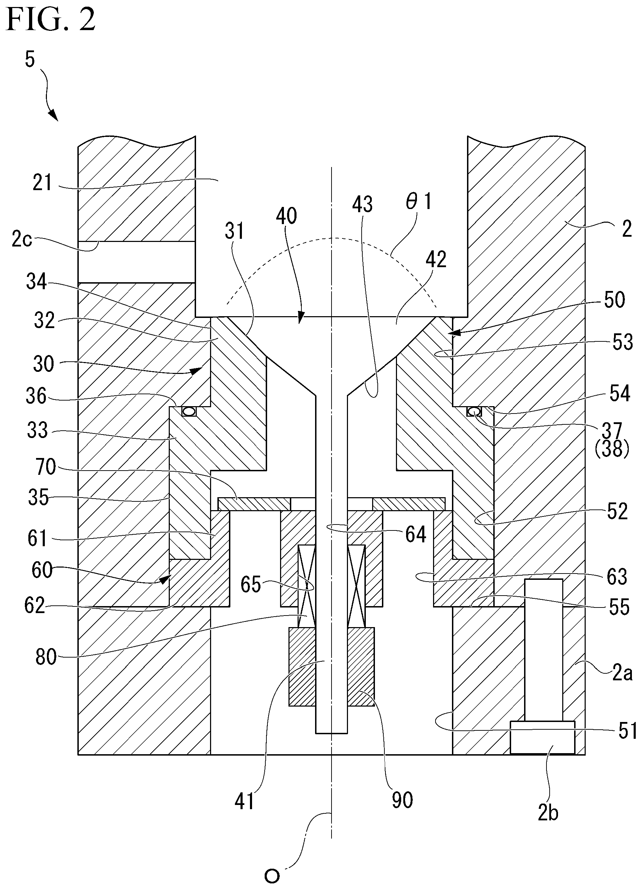

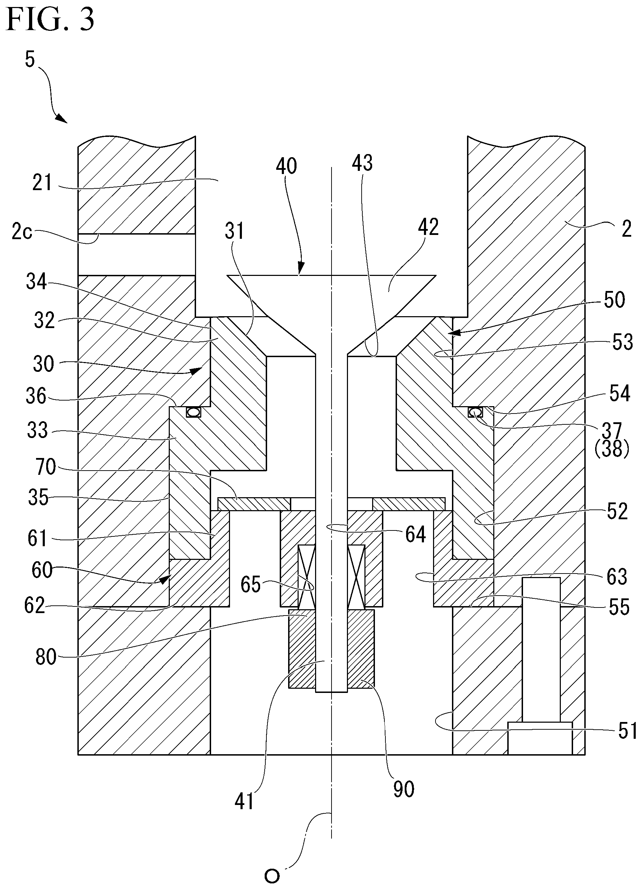

Next, a configuration of the suction valve 5 will be described with reference to FIGS. 2 and 3. As shown in FIG. 2, the delivery valve 7 is provided at an end portion of the cylinder 2 on one side in the axis O direction (that is, lower side). Specifically, an opening (accommodation hole 50) having a circular cross section centered on the axis O is formed at a lower end of the cylinder 2. A cover member 2a that covers the accommodation hole 50 from below is attached to a tip of the cylinder 2. The cover member 2a has a cylindrical shape centered on the axis O. The bolt 2b fastens and fixes the cover member 2a to the cylinder 2 from below. A plurality of bolts 2b are provided at spacings in a circumferential direction. The suction valve 5 is inserted into the accommodation hole 50. A lower inner-peripheral surface 51, a recessed inner-peripheral surface 52, and a protruding inner-peripheral surface 53 are formed on an inner-peripheral surface of the accommodation hole 50 from the one side to the other side in the axis O direction. The lower inner-peripheral surface 51 has a cylindrical surface shape centered on the axis O. The lower inner-peripheral surface 51 is an inner-peripheral surface of the cover member 2a. The recessed inner-peripheral surface 52 is connected to an upper side of the lower inner-peripheral surface 51. The recessed inner-peripheral surface 52 has a cylindrical surface shape centered on the axis O and has a larger inner diameter than the lower inner-peripheral surface 51. The protruding inner-peripheral surface 53 is connected to an upper side of the recessed inner-peripheral surface 52. The protruding inner-peripheral surface 53 has a cylindrical surface shape that protrudes to an inner-peripheral side with respect to the recessed inner-peripheral surface 52 and an inner-peripheral surface of the compression chamber 21. A surface that connects the protruding inner-peripheral surface 53 and the recessed inner-peripheral surface 52 is an upper stepped surface 54. Further, a surface that connects the protruding inner-peripheral surface 53 and the lower inner-peripheral surface 51 is a lower stepped surface 55.

The suction valve 5 has a cylindrical member 30, a valve body 40, a disc member 60, a ring valve 70, an elastic member 80, and a bush 90. The cylindrical member 30 extends in the axis O direction over the protruding inner-peripheral surface 53 and the recessed inner-peripheral surface 52. The cylindrical member 30 has a main body portion 32 having a valve seat 31 and an outer-peripheral portion 33 provided on an outer-peripheral side of the main body portion 32. The main body portion 32 has a cylindrical shape centered on the axis O. The valve seat 31 is formed on an end surface of the main body portion 32 on the other side in the axis O direction (that is, upper side). The valve seat 31 has a conical surface shape centered on the axis O. In other words, in a cross-sectional view including the axis O, a diameter dimension of the valve seat 31 gradually increases from the one side to the other side in the axis O direction. A main-body outer-peripheral surface 34, which is an outer-peripheral surface of the main body portion 32, is in a gap fit with the protruding inner-peripheral surface 53. That is, a slight gap is formed between the main-body outer-peripheral surface 34 and the protruding inner-peripheral surface 53. Therefore, the liquid in the compression chamber flows into an inner side of the gap. The main-body outer-peripheral surface 34 is formed in a region overlapping the valve seat 31 in the axis O direction. The main-body outer-peripheral surface 34 constitutes a pressure-receiving outer-peripheral surface that receives a pressure caused by the liquid flowing into the gap and offsets a pressure applied to the valve seat 31. The outer-peripheral portion 33 covers the outer-peripheral side of the main body portion 32 to overlap an end portion of the main body portion 32 on the one side in the axis O direction. The outer-peripheral portion 33 has a cylindrical shape centered on the axis O. An outer-peripheral surface (outer-side outer-peripheral surface 35) of the outer-peripheral portion 33 is in a gap fit with the recessed inner-peripheral surface 52. That is, a slight gap is formed between the outer-side outer-peripheral surface 35 and the recessed inner-peripheral surface 52.

A surface of the outer-peripheral portion 33 facing the other side in the axis O direction is a stepped surface 36. The stepped surface 36 has an annular shape centered on the axis O. The stepped surface 36 is formed with a seal groove 37 that extends in the circumferential direction of the axis O and is recessed toward the one side in the axis O direction. A seal ring 38 is accommodated in the seal groove 37. The seal ring 38 is provided to prevent leakage of the liquid between the upper stepped surface 54 and the stepped surface 36 of the outer-peripheral portion 33. The seal groove 37 may be formed on an upper stepped surface 54 side. The seal ring 38 prevents the liquid that has flowed into the gap between the main-body outer-peripheral surface 34 and the protruding inner-peripheral surface 53 from further entering downward. Further, with the fastening and fixing of the cover member 2a to the cylinder 2 using the bolt 2b, the seal ring 38 is accommodated in the seal groove 37 in a state of being elastically deformed.

The valve body 40 has a rod portion 41 and a head portion 42. The rod portion 41 has a rod shape extending in the axis O direction. The head portion 42 is integrally provided at an end portion of the rod portion 41 on the other side in the axis O direction. The head portion 42 gradually increases in diameter from the one side toward the other side in the axis O direction. A surface of the head portion 42 facing the one side in the axis O direction has a conical surface shape to form a seat surface 43 that is configured to be in contact with the valve seat 31 described above.

In the cross-sectional view including the axis O, an angle formed by the seat surface 43 with respect to the axis O, that is, an apex angle θ1 is desirably 80° or more and 100° or less. More desirably, the apex angle θ1 is 85° or more and 95° or less. Most desirably, the apex angle θ1 is 90°. Further, in the cross-sectional view including the axis O, a difference between the angle formed by the seat surface 43 with respect to the axis O and an angle formed by the valve seat 31 with respect to the axis O is desirably 0° or more and 1° or less. More desirably, the difference in angle is 0° or more and 0.2° or less. Further, the maximum outer diameter of the valve body 40, that is, an outer diameter of the head portion 42 is desirably 30% or more and 80% or less of the maximum inner diameter of the cylinder 2. Most desirably, the numerical range thereof is 70%.

The disc member 60 is provided to support the valve body 40 and the ring valve 70. The disc member 60 has a disc body portion 61 and a flange portion 62. The disc body portion 61 has a disc shape centered on the axis O. A plurality of communication holes 63 arranged at spacings in the circumferential direction with respect to the axis O are formed in the disc body portion 61. The communication holes 63 are covered by the ring valve 70 having an annular plate shape from the other side in the axis O direction. Further, a through hole 64 into which the rod portion 41 of the valve body 40 is inserted is formed at a position (center position) of the axis O of the disc body portion 61. The flange portion 62 protrudes from an end edge of the disc body portion 61 on the one side in the axis O direction toward an outer-peripheral side. An outer-peripheral surface of the flange portion 62 is in contact with the recessed inner-peripheral surface 52 in the radial direction and is in contact with the lower stepped surface 55 in the axis O direction.

An accommodation groove 65 is formed on a surface of the disc body portion 61 facing the one side in the axis O direction to surround the through hole 64. The accommodation groove 65 is a hole formed in a bottomed cylindrical shape centered on the axis O. A coil spring as the elastic member 80 for biasing the valve body 40 is accommodated in the accommodation groove 65. Further, the bush 90 is attached to the rod portion 41 of the valve body 40. More specifically, the bush 90 is a double nut of which the position relative to the rod portion 41 in the axis O direction is adjustable. The elastic member 80 exerts an elastic restoring force to extend toward both sides in the axis O direction between the bush 90 and a bottom surface of the accommodation groove 65. Accordingly, the valve body 40 is biased toward the one side in the axis O direction (lower side), and is in a closed valve state in a normal state. On the other hand, in a case where the piston 1 rises and an internal pressure of the compression chamber 21 decreases, a differential pressure causes the valve body 40 to be pulled upward against the elastic force of the elastic member 80. Accordingly, the suction valve 5 is in an open valve state (refer to FIG. 3).

### (Configuration of Delivery Valve 7)

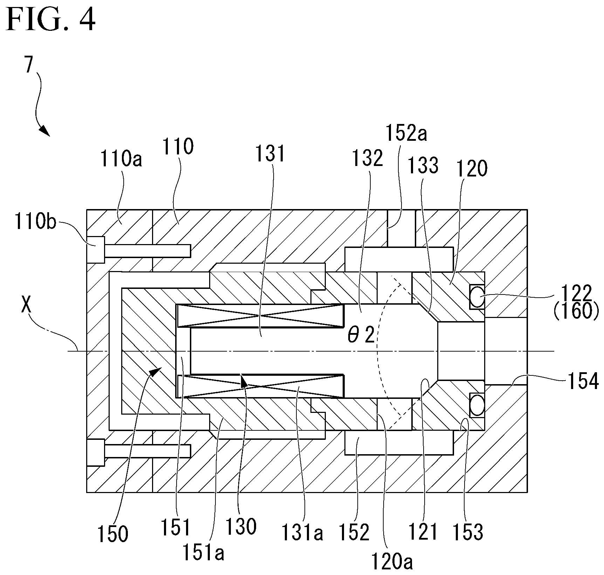

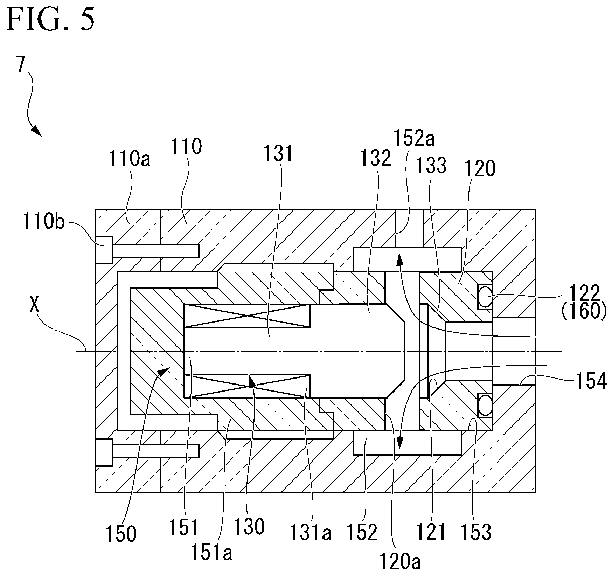

Next, a configuration of the delivery valve 7 will be described with reference to FIGS. 4 and 5. As shown in FIG. 4, the delivery valve 7 has a valve casing 110, a cover member 110a, a second cylindrical member 120, an internal member 151a, an elastic member 131a, a second valve body 130, and a second seal ring 160.

The valve casing 110 has a cylindrical shape centered on a second axis X that extends in a direction intersecting the axis O. An accommodation space 150 for accommodating the second cylindrical member 120 and the second valve body 130 is formed on an inner side of the valve casing 110. The accommodation space 150 includes a rod accommodation portion 151, a head accommodation portion 152, and a cylindrical member accommodation portion 153, which are arranged in order from one side to the other side in a second axis X direction. All of the rod accommodation portion 151, the head accommodation portion 152, and the cylindrical member accommodation portion 153 have a columnar shape centered on the second axis X. Among the above, an inner diameter of the head accommodation portion 152 is the largest, and an inner diameter of the rod accommodation portion 151 is the smallest. An inner diameter of the cylindrical member accommodation portion 153 is an intermediate value between the largest value and the smallest value. A discharge hole 152a for discharging the liquid to the discharge pipe 6 is formed in the head accommodation portion 152. The discharge hole 152a extends in the radial direction with respect to the second axis X. Further, a bolt 110b fastens and fixes the cover member 110a to the other side of the valve casing 110 in the axis X direction. Further, a delivery hole 154 through which the liquid flows is formed on an end surface of the valve casing 110 on the other side in the second axis X direction. In an open valve state, the liquid that has flowed in from the delivery hole 154 is delivered to the outside through a communication hole 120a formed in a second cylindrical member 120, which will be described below.

The second cylindrical member 120 is inserted from the cylindrical member accommodation portion 153 to a middle position of the rod accommodation portion 151. The second cylindrical member 120 has a cylindrical shape centered on the second axis X. A second valve seat 121 is formed on an end surface of the second cylindrical member 120 facing the one side in the second axis X direction. The second valve seat 121 gradually increases in diameter from the other side in the second axis X direction toward the one side, and thus has a conical surface shape. A second seal groove 122 that extends in a circumferential direction of the second axis X and is recessed toward the one side in the second axis X direction is formed on an end surface of the second cylindrical member 120 facing the other side in the second axis X direction. The second seal ring 160 is accommodated in the second seal groove 122. The bolt 110b presses the cover member 110a against the valve casing 110, and thus the second seal ring 160 is accommodated in the second seal groove 122 in a state of being elastically deformed.

Further, the internal member 151a is attached to an end portion of the second cylindrical member 120 on the other side in the axis X direction. The internal member 151a has a bottomed cylindrical shape centered on the axis X. On the other hand, an end portion on the one side is opened in the axis X direction, and thus the second valve body 130, which will be described below, is accommodated to move advanceably and retractably in the axis X direction. The elastic member 131a that biases the second valve body 130 toward the one side in the axis X direction is accommodated on an inner-peripheral side of the internal member 151a. The elastic member 131a is a coil spring. A male screw is formed on an outer-peripheral surface of the internal member 151a, and is screwed to a female screw formed on an inner-peripheral surface of the valve casing 110.

The second valve body 130 has a second rod portion 131 and a second head portion 132. The second rod portion 131 has a rod shape extending along the second axis X. The second head portion 132 is integrally provided at an end portion of the second rod portion 131 on the other side in the second axis X direction. The second head portion 132 has a columnar shape centered on the second axis X. The second head portion 132 has a larger outer diameter dimension than the second rod portion 131. A second seat surface 133 that is configured to be in contact with and be separated from the second valve seat 121 is formed on an end surface of the second head portion 132 on the other side in the second axis X direction. The second seat surface 133 gradually increases in diameter from the other side in the second axis X direction toward the one side, and thus has a conical surface shape.

In a cross-sectional view including the second axis X, an apex angle θ2, which is an angle formed by the second seat surface 133 with respect to the second axis X, is desirably 130° or more and 150° or less. More desirably, the apex angle θ2 is 135° or more and 145° or less. Most desirably, the apex angle θ2 is 138° or more and 142° or less. That is, the apex angle θ2 is most desirably 140°. Further, in the cross-sectional view including the second axis X, a difference between the angle formed by the second seat surface 133 with respect to the second axis X and an angle formed by the second valve seat 121 with respect to the second axis X is desirably 0° or more and 1° or less. More desirably, the difference in angle is 0° or more and 0.2° or less. Further, the ratio of an outer diameter of the second seat surface 133 to an inner diameter of the second seat surface 133 is desirably 1.2 or more and 1.3 or less. More desirably, the ratio is 1.22 or more and 1.28 or less. Most desirably, the ratio is 1.25. In addition, the ratio of an outer diameter to an inner diameter of the second valve seat 121 is desirably 1.6 or more and 2.0 or less. More desirably, the ratio is 1.7 or more and 1.9 or less. Most desirably, the ratio is 1.8.

### (Action and Effect)

In an operation of the reciprocating pump 100, first, the drive unit 3 causes the piston 1 to reciprocate in the cylinder 2 in a state where the liquid hydrogen is supplied into the cylinder 2 by the supply pipe 4b. Accordingly, the liquid hydrogen in the cylinder 2 is sequentially compressed, which results in a high-pressure state (for example, approximately 90 MPa). The liquid hydrogen in the high-pressure state is taken out to the outside through the discharge pipe 6.

Under the high pressure as described above, the suction valve 5 and the delivery valve 7 are also required to have corresponding pressure resistance performance and sealing performance. Therefore, each of the above configurations is employed in the present embodiment.

With the above configuration, the apex angle is 80° or more and 100° or less (preferably 90°), and the pressure applied to the valve seat 31 is offset by the reception of the pressure caused by the liquid that has flowed into the gap by the main-body outer-peripheral surface 34 as the pressure-receiving outer-peripheral surface. Therefore, a state as if hydrostatic pressure acts can be created. Accordingly, it is possible to suppress sliding on the seat surface 43.

In particular, in a case where rigidity of the valve body 40 is relatively smaller than rigidity of the valve seat 31, it is important to mainly suppress relative sliding between the two. With the above configuration, the contact is made at the same angle of approximately 45°. Thus, there is no difference in contact angle between the valve seat 31 and the valve body 40, and the contact can be made uniformly. Therefore, the surface pressure and the deformation of the valve seat 31 are uniform, and it is possible to reduce the relative sliding and extreme uneven contact.

With the above configuration, the difference in angle between the seat surface 43 and the valve seat 31 with respect to the axis O is 0° or more and 1° or less. Accordingly, the seat surface 43 and the valve seat 31 are in contact with each other (are in internal contact) on an inner-peripheral side. With the internal contact, it is possible to offset a pressure of fluid flowing into the gap of the seat surface 43 from the outer-peripheral side to an inner peripheral line contact position and a part of a pressure acting from a downstream side, and to reduce a total differential pressure acting on the valve body 40. Therefore, it is possible to reduce the surface pressure of the seat surface 43, and thus to significantly reduce the possibility of damage even in a case where the contact caused by opening and closing the valve is repeated.

With the above configuration, the stepped surface 36 is further formed on the outer-peripheral side of the cylindrical member 30, and the seal groove 37 in which the seal ring 38 can be accommodated is formed in the stepped surface 36. Accordingly, with the use of the pressure acting on the outer periphery of the valve seat 31, it is possible to suppress the deformation in which the valve seat 31 formed in a hollow cylindrical shape opens to the outer-peripheral side. Further, it is not necessary to form the annular groove on the outer-peripheral side of the valve seat 31 as in the related art. Accordingly, it is possible to achieve both the reduction in size of the suction valve 5 and the improvement in sealing performance.

With the above configuration, with the setting of the maximum outer diameter of the valve body 40 to 80% or less of the maximum inner diameter of the cylinder 2, it is possible to further improve the sealing performance while suppressing the occurrence of cavitation (foaming) of the liquid. Further, the above setting also leads to a reduction in dead volume that leads to a decrease in efficiency.

With the above configuration, since the position of the bush 90 in the axis O direction is adjustable, it is possible to adjust a lift amount (amount of movement in axis O direction) of the valve body 40 determined by the position of the bush 90 as appropriate. Accordingly, with adjustment of a valve opening degree during valve opening, it is possible to achieve both ensurance of an appropriate flow rate and the suppression of the occurrence of excessive impact force during seating.

With the above configuration, the second seal groove 122 having the annular shape centered on the second axis X is formed in the end surface of the second cylindrical member 120 facing the other side in the second axis X direction. With the provision of the second seal groove 122, it is possible to reduce the stress loaded on the second cylindrical member 120 during valve closing by the second seal groove 122. Accordingly, it is possible to ensure stable operation of the delivery valve 7. Further, with the accommodation of the seal ring 38 in the second seal groove 122, it is possible to ensure the sealing performance between the second cylindrical member 120 and the casing 4. Furthermore, both the second valve body 130 and the second cylindrical member 120 are rigid. Therefore, with the contact of the second valve body 130 with the second cylindrical member 120 at an angle of approximately 140°, which is close to a flat plate, it is possible to suppress a wedge effect and to make the surface pressure uniform. Further, it is possible to ensure the surface contact between the two, and thus to prevent an increase in the relative sliding and extreme uneven contact. Accordingly, it is possible to further improve the sealing performance of the delivery valve 7.

With the above configuration, the angle formed by the second valve seat 121 and the second seat surface 133 with respect to the second axis X is 0° or more and 1° or less. Accordingly, the second valve seat 121 and the second seat surface 133 are in line contact with each other. Therefore, a line of a surface pressure peak is provided, instead of a uniform surface pressure that is leveled. Accordingly, it is possible to suppress the leakage of the liquid through a space between the second valve seat 121 and the second seat surface 133. As a result, it is possible to further improve the sealing performance of the delivery valve 7.

With the above configuration, with the setting of the ratio of the outer diameter to the inner diameter of the second seat surface 133 to 1.2 or more and 1.3 or less, it is possible to optimize rigidity balance of the second valve body 130. Accordingly, it is possible to reduce the relative sliding between the second valve seat 121 and the second valve body 130. As a result, it is possible to further improve the sealing performance of the delivery valve 7.

With the above configuration, with the setting of the ratio of the outer diameter to the inner diameter of the second valve seat 121 to 1.6 or more and 2.0 or less, it is possible to optimize the rigidity balance of the second valve body 130. Accordingly, it is possible to reduce the relative sliding between the second valve seat 121 and the second valve body 130. As a result, it is possible to further improve the sealing performance of the delivery valve 7.

### <Other Embodiments>

The embodiments of the present disclosure have been described above. Various changes or modifications can be made to each of the above configurations without departing from the gist of the present disclosure. For example, in the above embodiment, the example in which the reciprocating pump 100 is used to compress the liquid hydrogen has been described. However, the reciprocating pump 100 can also be suitably used for compression of low-temperature liquefied gases such as liquefied carbon dioxide, liquefied natural gas, and liquefied petroleum gas.

### <Supplementary Note>

The reciprocating pump 100 described in each of the above embodiments is understood as follows, for example.
(1) A reciprocating pump 100 according to a first aspect includes a pump body 9 including a piston 1 that compresses liquid and a cylinder 2 that has a cylindrical shape centered on an axis O and covers the piston 1 from an outer side, a drive unit 3 that causes the piston 1 to reciprocate in an axis O direction with respect to the cylinder 2, and a suction valve 5 and a delivery valve 7 that are provided in the cylinder 2 and switch a flow state of the liquid, in which the suction valve 5 includes a cylindrical member 30 that is inserted into an accommodation hole 50 formed in an end portion of the cylinder 2 on a first side in the axis O direction, and a valve body 40 that is configured to move advanceably and retractably in the axis O direction with respect to the cylindrical member 30, the valve body 40 includes a rod portion 41 that extends in the axis O direction, and a head portion 42 that is provided at an end portion of the rod portion 41 on a second side in the axis O direction and has a seat surface 43 formed in a conical surface shape that gradually increases in diameter from the first side toward the second side in the axis O direction, and the cylindrical member 30 includes a valve seat 31 formed in a conical surface shape that is in contact with or is separated from an outer-peripheral surface of the head portion 42, and a pressure-receiving outer-peripheral surface (main-body outer-peripheral surface 34) that is fitted, via a gap communicating with a compression chamber 21, into an inner-peripheral surface of the cylinder 2 on a radially outer side of the valve seat 31.
   With the above configuration, the cylindrical member 30 has the pressure-receiving outer-peripheral surface provided in the region overlapping the valve seat 31 in the axis O direction. Therefore, the deformation of the cylindrical member 30 during valve closing is suppressed, and it is possible to improve the sealing performance between the valve body 40 and the valve seat 31.
(2) The reciprocating pump 100 according to a second aspect is the reciprocating pump 100 of (1), in which in a cross-sectional view including the axis O, an apex angle, which is an angle formed by the seat surface 43 of the valve body 40 with respect to the axis O, is 80° or more and 100° or less.
   With the above configuration, since the apex angle is 80° or more and 100° or less, the seat surface 43 and the valve seat 31 are in contact with each other at a same angle of approximately 45°. Therefore, the surface pressure and the deformation of the valve seat 31 are uniform, and it is possible to reduce the relative sliding and the extreme uneven contact.
(3) The reciprocating pump 100 according to a third aspect is the reciprocating pump 100 of (2), in which in the cross-sectional view including the axis O, a difference between the angle formed by the seat surface 43 with respect to the axis O and an angle formed by the valve seat 31 with respect to the axis O is 0° or more and 1° or less.
   With the above configuration, the difference in angle between the seat surface 43 and the valve seat 31 with respect to the axis O is 0° or more and 1° or less. Therefore, it is possible to improve the sealing performance and to suppress the damage due to the extreme uneven contact.
(4) The reciprocating pump 100 according to a fourth aspect is the reciprocating pump 100 of any one of (1) to (3), in which the cylindrical member 30 further includes a stepped surface 36 that spreads from an end edge of the pressure-receiving outer-peripheral surface on the first side in the axis O direction toward an outer-peripheral side, and the stepped surface 36 is formed with a seal groove 37 that has an annular shape centered on the axis O and is recessed toward the first side in the axis O direction to accommodate a seal ring 38.
   With the above configuration, the stepped surface 36 is further formed on the outer-peripheral side of the cylindrical member 30, and the seal groove 37 in which the seal ring 38 can be accommodated is formed in the stepped surface 36. Accordingly, with the use of the pressure acting on the outer periphery of the valve seat 31, it is possible to suppress the deformation in which the valve seat 31 formed in a hollow cylindrical shape opens to the outer-peripheral side.
(5) The reciprocating pump 100 according to a fifth aspect is the reciprocating pump 100 of any one of (1) to (4), in which the maximum outer diameter of the valve body 40 is 30% or more and 80% or less of the maximum inner diameter of the cylinder 2.
   With the above configuration, it is possible to suppress the occurrence of cavitation (foaming) of the liquid with the setting of the maximum outer diameter of the valve body 40 to 30% or more and 80% or less of the maximum inner diameter of the cylinder 2, and thus it is possible to contribute to the improvement of the performance of the reciprocating pump 100.
(6) The reciprocating pump 100 according to a sixth aspect is the reciprocating pump 100 of any one of (1) to (5), the reciprocating pump 100 further including a bush 90 that is provided on an outer-peripheral side of the rod portion 41, and an elastic member 80 that biases the bush 90 toward the first side in the axis O direction, in which the position of the bush 90 in the axis O direction is configured to be adjustable.
   With the above configuration, it is possible to adjust the flow rate to be appropriate and the lift amount to suppress an excessive impact load according to operation conditions.
(7) The reciprocating pump 100 according to a seventh aspect is the reciprocating pump 100 of any one of (1) to (6), in which the delivery valve 7 includes a second cylindrical member 120 that is provided in parallel in an outer-peripheral surface of the cylinder 2, has a cylindrical shape centered on a second axis X extending in a direction intersecting the axis O, and has a second valve seat 121 formed in a conical surface shape that is centered on the second axis X, a second valve body 130 that is configured to move advanceably and retractably in a second axis X direction with respect to the second cylindrical member 120, and a casing 4 that covers the second cylindrical member 120 from the outer side, the second valve body 130 includes a second rod portion 131 that extends in the second axis X direction and a second head portion 132 that is provided at an end portion of the second rod portion 131 on a second side in the second axis X direction and has a second seat surface 133 formed in a conical surface shape that gradually increases in diameter from a first side toward the second side in the second axis X direction, a second seal groove 122 that has an annular shape centered on the second axis X and is recessed toward the first side in the second axis X direction to accommodate a seal ring 38 is formed in an end surface of the second cylindrical member 120 facing the second side in the second axis X direction, and in a cross-sectional view including the second axis, an apex angle, which is an angle formed by the second seat surface 133 of the second valve body 130 with respect to the second axis X, is 130° or more and 150° or less.
   With the above configuration, the second seal groove 122 having the annular shape centered on the second axis X is formed in the end surface of the second cylindrical member 120 facing the second side in the second axis X direction. With the provision of the second seal groove 122, it is possible to reduce the stress loaded on the second cylindrical member 120 during valve closing by the second seal groove 122. Accordingly, it is possible to ensure stable operation of the delivery valve 7.
(8) The reciprocating pump 100 according to an eighth aspect is the reciprocating pump 100 of (7), in which in the cross-sectional view including the second axis X, a difference between the angle formed by the second seat surface 133 with respect to the second axis X and an angle formed by the second valve seat 121 with respect to the second axis X is 0° or more and 1° or less.
   With the above configuration, it is possible to suppress the leakage of the liquid through the space between the second valve seat 121 and the second seat surface 133. As a result, it is possible to further improve the sealing performance of the delivery valve 7.
(9) The reciprocating pump 100 according to a ninth aspect is the reciprocating pump 100 of (7) or (8), in which the ratio of an outer diameter of the second seat surface 133 to an inner diameter of the second seat surface 133 is 1.2 or more and 1.3 or less.
   With the above configuration, with the setting of the ratio of the outer diameter to the inner diameter of the second seat surface 133 to 1.2 or more and 1.3 or less, it is possible to optimize rigidity balance of the second valve body 130. Accordingly, it is possible to reduce the relative sliding between the second valve seat 121 and the second valve body 130.
(10) The reciprocating pump 100 according to a tenth aspect is the reciprocating pump 100 of any one of (7) to (9), in which the ratio of an outer diameter of the second valve seat 121 to an inner diameter of the second valve seat 121 is 1.6 or more and 2.0 or less.
   With the above configuration, with the setting of the ratio of the outer diameter to the inner diameter of the second valve seat 121 to 1.6 or more and 2.0 or less, it is possible to optimize the rigidity balance of the second valve body 130. Accordingly, it is possible to reduce the relative sliding between the second valve seat 121 and the second valve body 130.
(11) The reciprocating pump 100 according to a second aspect includes a pump body 9 including a piston 1 that compresses liquid and a cylinder 2 that has a cylindrical shape centered on an axis O and covers the piston 1 from an outer side, a drive unit 3 that causes the piston 1 to reciprocate in an axis O direction with respect to the cylinder 2, and a delivery valve 7 that is provided in the cylinder 2 and switches a flow state of the liquid, in which the delivery valve 7 includes a second cylindrical member 120 formed in a cylindrical shape that is provided in parallel in an outer-peripheral surface of the cylinder 2 and is centered on a second axis X extending in a direction intersecting the axis O, a second valve body 130 that is configured to move advanceably and retractably in a second axis X direction with respect to the second cylindrical member 120, and a casing 4 that covers the second cylindrical member 120 from the outer side, the second valve body 130 includes a second rod portion 131 that extends in the second axis X direction and a second head portion 132 that is provided at an end portion of the second rod portion 131 on a second side in the second axis X direction and has a second seat surface 133 formed in a conical surface shape that gradually increases in diameter from a first side toward the second side in the second axis X direction, a second seal groove 122 that has an annular shape centered on the second axis X and is recessed toward the first side in the second axis X direction to accommodate a seal ring 38 is formed in an end surface of the second cylindrical member 120 facing the second side in the second axis X direction, and in a cross-sectional view including the second axis X, an apex angle, which is an angle formed by the second seat surface 133 of the second valve body 130 with respect to the second axis X, is 130° or more and 150° or less.

With the above configuration, the second seal groove 122 having the annular shape centered on the second axis X is formed in the end surface of the second cylindrical member 120 facing the second side in the second axis X direction. With the provision of the second seal groove 122, it is possible to release, through the second seal groove 122, the stress loaded on the second cylindrical member 120 during valve closing. Accordingly, it is possible to ensure stable operation of the delivery valve 7.

### INDUSTRIAL APPLICABILITY

According to the present disclosure, it is possible to provide the reciprocating pump having the suction valve or the delivery valve that exhibits the higher sealing performance.

### REFERENCE SIGNS LIST

1 Piston
2 Cylinder
3 Drive unit
4 Casing
5 Suction valve
6 Discharge pipe
7 Delivery valve
9 Pump body
10 Piston body
11 Wear ring
12 Piston ring
21 Compression chamber
30 Cylindrical member
31 Valve seat
32 Main body portion
33 Outer-peripheral portion
34 Main-body outer-peripheral surface
35 Outer-side outer-peripheral surface
36 Stepped surface
37 Seal groove
38 Seal ring
40 Valve body
4a Casing body
41 Rod portion
4b Supply pipe
42 Head portion
4c Gas discharge pipe
43 Seat surface
44 Liquid storage chamber
50 Accommodation hole
51 Lower inner-peripheral surface
52 Recessed inner-peripheral surface
53 Protruding inner-peripheral surface
54 Upper stepped surface
55 Lower stepped surface
60 Disc member
61 Disc body portion
62 Flange portion
63 Communication hole
64 Through hole
65 Accommodation groove
70 Ring valve
80 Elastic member
90 Bush
100 Reciprocating pump
110 Valve casing
120 Second cylindrical member
121 Second valve seat
122 Second seal groove
130 Second valve body
131 Second rod portion
132 Second head portion
133 Second seat surface
150 Accommodation space
160 Second seal ring
151 Rod accommodation portion
152 Head accommodation portion
153 Cylindrical member accommodation portion
154 Delivery hole
160 Second seal ring
h Opening portion
O Axis
X Second axis

## Claims

1. A reciprocating pump comprising:
a pump body including a piston that compresses liquid and a cylinder that has a cylindrical shape centered on an axis and covers the piston from an outer side;
a drive unit that causes the piston to reciprocate in an axial direction with respect to the cylinder; and
a suction valve and a delivery valve that are provided in the cylinder and switch a flow state of the liquid,
wherein the suction valve includes
a cylindrical member that is inserted into an accommodation hole formed in an end portion of the cylinder on a first side in the axial direction, and
a valve body that is configured to move advanceably and retractably in the axial direction with respect to the cylindrical member,
the valve body includes a rod portion that extends in the axial direction, and a head portion that is provided at an end portion of the rod portion on a second side in the axial direction and has a seat surface formed in a conical surface shape that gradually increases in diameter from the first side toward the second side in the axial direction, and
the cylindrical member includes
a valve seat formed in a conical surface shape that is in contact with or is separated from an outer-peripheral surface of the head portion, and
a pressure-receiving outer-peripheral surface that is fitted, via a gap communicating with a compression chamber, into an inner-peripheral surface of the cylinder on a radially outer side of the valve seat.

2. The reciprocating pump according to Claim 1,
wherein in a cross-sectional view including the axis, an apex angle, which is an angle formed by the seat surface of the valve body with respect to the axis, is 80° or more and 100° or less.

3. The reciprocating pump according to Claim 2,
wherein in the cross-sectional view including the axis, a difference between the angle formed by the seat surface with respect to the axis and an angle formed by the valve seat with respect to the axis is 0° or more and 1° or less.

4. The reciprocating pump according to any one of Claims 1 to 3,
wherein the cylindrical member further includes a stepped surface that spreads from an end edge of the pressure-receiving outer-peripheral surface on the first side in the axial direction toward an outer-peripheral side, and the stepped surface is formed with a seal groove that has an annular shape centered on the axis and is recessed toward the first side in the axial direction to accommodate a seal ring.

5. The reciprocating pump according to any one of Claims 1 to 3,
wherein a maximum outer diameter of the valve body is 60% or more and 80% or less of a maximum inner diameter of the cylinder.

6. The reciprocating pump according to any one of Claims 1 to 3, further comprising:
a bush that is provided on an outer-peripheral side of the rod portion; and
an elastic member that biases the bush toward the first side in the axial direction,
wherein a position of the bush in the axial direction is configured to be adjustable.

7. The reciprocating pump according to any one of Claims 1 to 3,
wherein the delivery valve includes
a second cylindrical member that is provided in parallel in an outer-peripheral surface of the cylinder, has a cylindrical shape centered on a second axis extending in a direction intersecting the axis, and has a second valve seat formed in a conical surface shape that is centered on the second axis,
a second valve body that is configured to move advanceably and retractably in a second axial direction with respect to the second cylindrical member, and
a casing that covers the second cylindrical member from the outer side,
the second valve body includes a second rod portion that extends in the second axial direction and a second head portion that is provided at an end portion of the second rod portion on a second side in the second axial direction and has a second seat surface formed in a conical surface shape that gradually increases in diameter from a first side toward the second side in the second axial direction,
a second seal groove that has an annular shape centered on the second axis and is recessed toward the first side in the second axial direction to accommodate a seal ring is formed in an end surface of the second cylindrical member facing the second side in the second axial direction, and
in a cross-sectional view including the second axis, an apex angle, which is an angle formed by the second seat surface of the second valve body with respect to the second axis, is 130° or more and 150° or less.

8. The reciprocating pump according to Claim 7,
wherein in the cross-sectional view including the second axis, a difference between the angle formed by the second seat surface with respect to the second axis and an angle formed by the second valve seat with respect to the second axis is 0° or more and 1° or less.

9. The reciprocating pump according to Claim 7,
wherein a ratio of an outer diameter of the second seat surface to an inner diameter of the second seat surface is 1.2 or more and 1.3 or less.

10. The reciprocating pump according to Claim 7,
wherein a ratio of an outer diameter of the second valve seat to an inner diameter of the second valve seat is 1.6 or more and 2.0 or less.

11. A reciprocating pump comprising:
a pump body including a piston that compresses liquid and a cylinder that has a cylindrical shape centered on an axis and covers the piston from an outer side;
a drive unit that causes the piston to reciprocate in an axial direction with respect to the cylinder; and
a delivery valve that is provided in the cylinder and switches a flow state of the liquid,
wherein the delivery valve includes
a second cylindrical member formed in a cylindrical shape that is provided in parallel in an outer-peripheral surface of the cylinder and is centered on a second axis extending in a direction intersecting the axis,
a second valve body that is configured to move advanceably and retractably in a second axial direction with respect to the second cylindrical member, and
a casing that covers the second cylindrical member from the outer side,
the second valve body includes a second rod portion that extends in the second axial direction and a second head portion that is provided at an end portion of the second rod portion on a second side in the second axial direction and has a second seat surface formed in a conical surface shape that gradually increases in diameter from a first side toward the second side in the second axial direction,
a second seal groove that has an annular shape centered on the second axis and is recessed toward the first side in the second axial direction to accommodate a seal ring is formed in an end surface of the second cylindrical member facing the second side in the second axial direction, and
in a cross-sectional view including the second axis, an apex angle, which is an angle formed by the second seat surface of the second valve body with respect to the second axis, is 130° or more and 150° or less.
